Europäisches Patentamt

European Patent Office

Office européen des brevets

(11) Publication number: **0 421 338 A1**

(12) **EUROPEAN PATENT APPLICATION**

(21) Application number: 90118853.2

(22) Date of filing: 02.10.90

(51) Int. Cl.⁵: **G02C 11/06, H04R 25/00**

(30) Priority: 05.10.89 IT 2193189

(43) Date of publication of application:
10.04.91 Bulletin 91/15

(84) Designated Contracting States:
AT BE CH DE DK ES FR GB GR IT LI LU NL SE

(71) Applicant: **Farinella, Biagio**
**Via Vittorio Amedeo, 37**
**I-90018 Termini Imerese (Palermo)(IT)**

(72) Inventor: **Farinella, Biagio**
**Via Vittorio Amedeo, 37**
**I-90018 Termini Imerese (Palermo)(IT)**

(74) Representative: **Gervasi, Gemma et al**
**NOTARBARTOLO & GERVASI Srl Viale**
**Bianca Maria 33**
**I-20122 Milan(IT)**

(54) Acoustic prosthesis with transcranial transmission for subjects affected by monolateral deafness of marked monolateral sensorineural deafness.

(57) An acoustic prosthesis for subjects affected by monolateral total deafness or marked monolateral sensorineural deafness having the form of spectacles, in which at that spectacle arm (1) end corresponding to the totally deaf ear or the ear affected by marked sensorineural deafness there is applied a bone conduction prosthesis (3) to be rested against the mastoid, the sounds fed to the totally deaf ear or the ear affected by marked sensorineural deafness being transmitted by a transcranial bone path to the heal thy cochlea of the ear on the opposite side. The prosthesis does not require surgery for its application.

FIG. 2

# ACOUSTIC PROSTHESIS WITH TRANSCRANIAL TRANSMISSION FOR SUBJECTS AFFECTED BY MONOLATERAL TOTAL DEAFNESS OR MARKED MONOLATERAL SENSORINEURAL DEAFNESS

## Prior art

Acoustic pros theses are widely used by subjects affected by deafness, and various types of such acoustic prostheses have been developed, as described for example in the book "Protesi acustica e terapia protesica" by G. Aliprandi and A. Arpini (Published by Libreria Scientifica già GHEDINI - 1980).

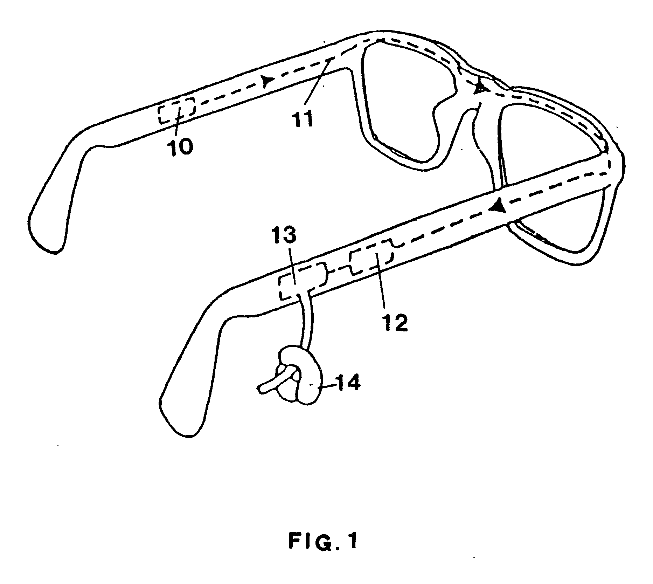

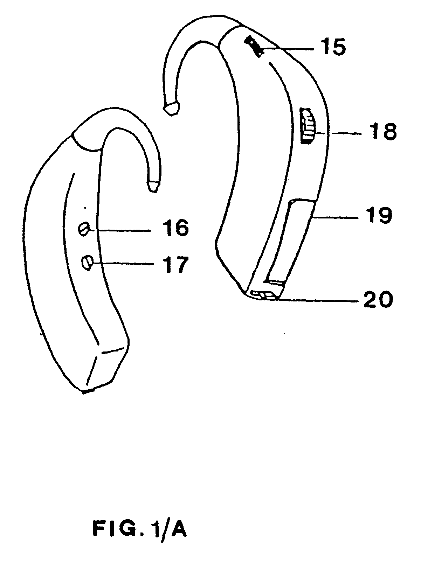

A model described in this book is illustrated in Figure 1, which shows the numerous component elements of the prosthesis, namely a microphone 10 (applied to the deaf ear), a wire 11 extending through the spectacles, an amplifier 12, a reproducer 13 and an open cochleate fitting 14 (which is fitted to the healthy ear).

The described model, known as CROS, is available in various versions which differ in their amplification characteristics, which are adapted to the requirements of the patient wearing the prosthesis.

From the functional aspect, these models adequately satisfy the requirement of restoring hearing capacity to deaf subjects, however in clinical practice a widespread resistance to their application is noticed in subjects affected by monolateral total deafness. In practice about 95% of such subjects refuse the application of a CROS prosthesis because of the overall negative appearance of the prosthesis and particularly of its cochleate fitting.

Another model described in the same book ("Protesi acustica e terapia protesica" by G. Aliprandi and A. Arpini - Published by Libreria Scientifica già GHEDINI - 1980) and reproduced in "Manuale di Audiologia" by M. Del BO, F. Giaccai and G. Grisanti, publ. Masson, Milan 1984, is illustrated in Figure 1A, which shows the numerous component elements of the retroauricular prosthesis, namely a microphone 15, tone control 16, maximum output limiter 17, switch 20, battery compartment 19 and potentiometer 18, in addition to the cochleate fitting which is made to measure in either solid or hollow form for fitting to the ear affected by marked sensorineural deafness. The described retroauricular model is also available in various versions differing in terms of their amplification characteristics, which are adapted to the requirements of the patient.

These models adequately satisfy the requirement of restoring hearing capacity to subjects afflicted by marked sensorineural deafness, however in clinical practice a widespread resistance to their application is noticed by patients, especially those affected by marked monolateral sensorineural deafness, because of the presence of the cochleate fitting to be inserted into the external acoustic duct, the connection tube and the retroauricular prosthesis, which overall have a negative appearance. They are also refused by many patients because of the possible presence of the "Larsen effect" which occurs in high-power prostheses because of the tone/intensity difference between the ear carrying the prosthesis and the healthy ear.

## Summary of the invention

We have now found a new acoustic prosthesis for subjects affected by monolateral total deafness or marked monolateral sensorineural deafness which obviates the drawbacks of prostheses of the known art, and in particular overcomes the negative appearance aspect of such prostheses of the known art. The prosthesis according to the present invention is in the form of spectacles and is characterised in that at that spectacle arm end corresponding to the totally deaf ear or ear affected by marked sensorineural deafness there is applied a bone conduction prosthesis, the sounds fed to the totally deaf ear or ear affected by marked sensorineural deafness being transmitted by a transcranial bone path to the healthy cochlea of the ear on the opposite side by normal bone conduction.

## Detailed description of the invention

The characteristics and advantages of the acoustic prosthesis for subjects affected by monolateral total deafness or marked monolateral sensorineural deafness according to the present invention will be more apparent from the detailed description given hereinafter with reference to the accompanying figures, of which:

Figure 1 represents a CROS prosthesis of the known art, as heretofore described;

Figure 1A represents a retroauricular prosthesis of the known art, as heretofore described;

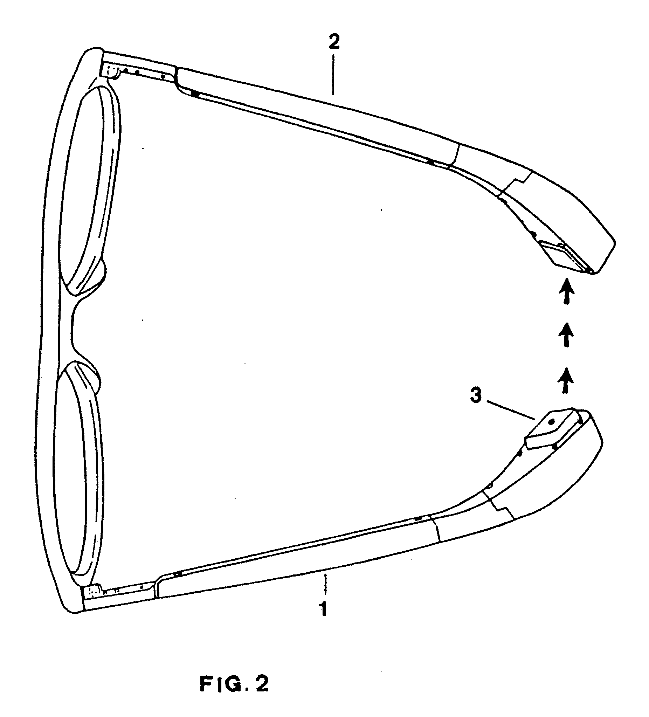

Figure 2 shows a prosthesis according to the present invention;

Figure 3 shows the application of the prosthesis according to the present invention;

Figures 4 and 5 show the vocal audiograms of the healthy ear and of the deaf ear with the prosthesis according to the invention applied, respectively. As can be seen from Figures 2 and 3, the prosthesis is in the form of a pair of spectacles which, in the illustrated embodiment, is arranged for a subject with deafness on the left side.

In said figures, the reference numeral 1 indicates the left arm, 2 indicates the right arm and 3 indicates the bone conduction prosthesis, which comprises a bone vibrator applied to that end of the left arm corresponding to the deaf ear. The bone conduction prosthesis 3 comprises the following elements:

- a battery compartment with switch;
- an bone vibrator which rests against the outside of the mastoid without the need for surgery;
- a condenser microphone;
- a manual volume control.

In a preferred embodiment the electroacoustic characteristics of the prosthesis are as follows:

- power supply: 1.3 V;
- maximum gain: 0.3 g - 0.65 g;
- maximum gain at 1000 Hz: 0.06 g - 0.4 g;
- maximum HAIC gain: 0.7 g - 0.416 g;
- maximum HAIC power: 0.7 g - 1.63;
- maximum power at 1000 Hz: 0.8 - 1.8 g.
- AGC-I 1:10
- AGC-O 1,5:10

where AGC means automatic control gain, I means inlet and O means outlet.

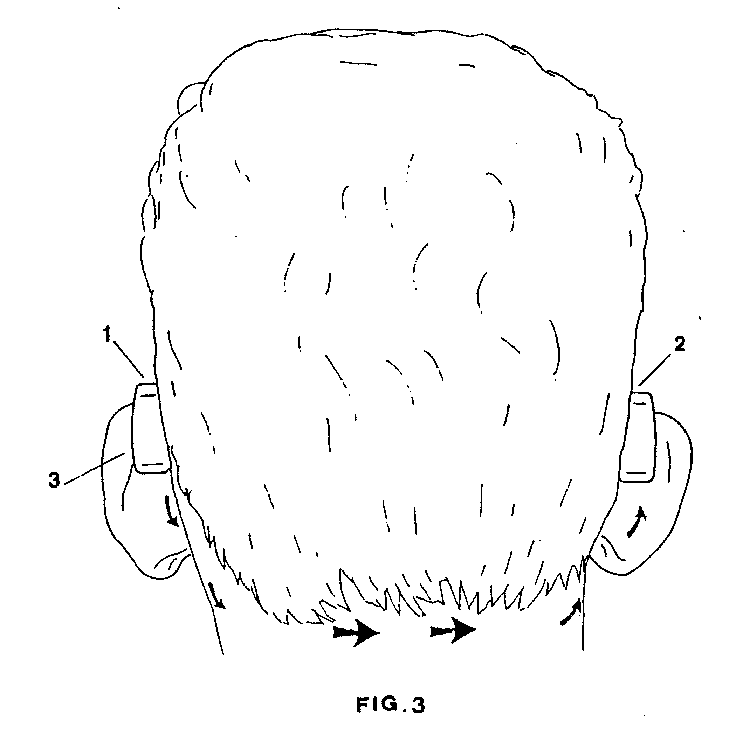

The HAIC gain is determined as defined by the Hearing Aid Industry Conference, ie by calculating the mean of the prosthesis gain at frequencies of 500, 1000 and 2000 Hz. As shown by the arrows of Figure 3, the sound fed to the deaf left ear are transmitted by a transcranial bone path to the healthy cochlea of the right ear.

The application of the prosthesis according to the invention was tested on 28 subjects (20 male and 8 female) affected by monolateral total deafness of various etiology, such as viral, vascular, the outcome of surgery on the cerebellopontine angle because of expansion processes, the outcome of cranial traumas, and the outcome of middle ear or inner ear microsurgery, and on 16 subjects (10 female and 6 male) affected by marked monolateral sensorineural deafness.

For the deaf ear, a maximum gain of 0.7 g with maximum gain at 1000 Hz of 0.06 was applied, together with a maximum HAIC power of 0.7 g, with maximum power at 1000 Hz of 0.8 g.

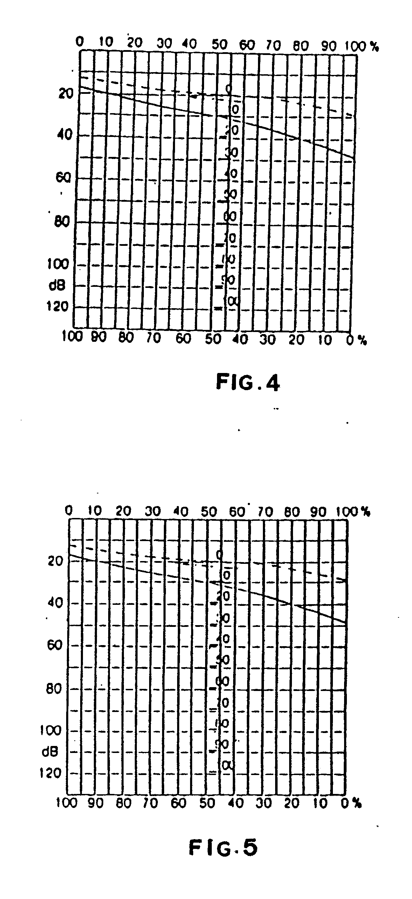

Figures 4 and 5 show the vocal audiograms for, respectively, the right (healthy) ear and the left (deaf) ear with the prosthesis according to the invention fitted. The upper horizontal axis represents intelligibility and the lower horizontal axis represents loss of discrimination, the vertical axes representing decibels. The dashed curves relate to the hearing of words, whereas the continuous curves relate to the hearing of logotomes

The applicational tests show that with the prosthesis according to the invention a monolaterally deaf patient is able to hear a whispered voice on the deaf ear side, with undoubted human relationship advantages.

In addition, because of the ease of external application to the mastoid without the need for surgery, the absence of the cochleate fitting to be applied to the healthy ear, the absence of voice distortion and the elegance of the spectacles, the prosthesis according to the invention should be totally pleasing to patients.

The same prosthesis when applied to a patient with marked monolateral sensorineural deafness but with normal bone conduction in the ear on the opposite side enables a whispered voice on the deaf ear side to be heard without the application of a (solid or hollow) cochleate fitting to the ear affected by the marked sensorineural deafness, and moreover without any distortion in the conversational voice and without the annoying "Larsen effect" appearing.

From the aforegoing it is apparent that the prosthesis according to the present invention represents an adequate solution for subjects affected by monolateral total deafness or marked monolateral sensorineural deafness, independently of the cause of the deafness.

## Claims

1. An acoustic prosthesis for subjects affected by monolateral total deafness or marked monolateral sensorineural deafness having the form of spectacles, characterised in that at that spectacle arm (1) end corresponding to the totally deaf ear or the ear affected by marked sensorineural deafness there is applied a bone conduction prosthesis (3), the sounds fed to the totally deaf ear or the ear affected by marked sensorineural deafness being transmitted by a transcranial bone path to the healthy cochlea of the ear on the opposite side by normal bone conduction.

2. An acoustic prosthesis as claimed in claim 1, characterised in that said bone conduction prosthesis (3) comprises a bone vibrator, a condenser microphone, a volume control, a battery compartment and a switch.

3. An acoustic prosthesis as claimed in claim 1, characterised by being applied to the mastoid, without the need for surgery, to subjects affected by monolateral total deafness or marked monolateral sensorineural deafness of varying etiology, such as viral, vascular, the outcome of surgery on the cerebellopontine angle because of expansion processes, the outcome of cranial traumas, and the outcome of middle ear or inner ear microsurgery.

**FIG. 1**

15

18

19

16

17

20

**FIG. 1/A**

**FIG. 2**

**FIG.3**

FIG.4

FIG.5

European
Patent Office

**EUROPEAN SEARCH
REPORT**

Application Number

**EP 90 11 8853**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-7 575 90 (F. ZAPELLONI)<br>* Page 1, lines 65-79; page 2, lines 10-15; figure 1 *<br>- - - | 1-3 | G 02<br>C 11/06<br>H 04 R 25/00 |
| X | GB-A-7 577 88 (SCHUMANN)<br>* Page 2, claim 1; page 2; page 3, claims 8,9 *<br>- - - | 1-3 | |
| X | US-A-3 030 455 (H. PEARSON)<br>* Column 3, line 29 - column 4, line 14; figures 1-4 *<br>- - - | 1-3 | |
| X | US-A-3 019 305 (S.T. McCARRELL)<br>* Column 4, line 14 - column 5, line 28; figure 1 *<br>- - - | 1-3 | |
| A | JOURNAL OF THE ACOUSTICAL SOCIETY OF AMERICA, vol. 57, no. 1, January 1975, pages 200-206; F.A. TYSZKA et al.: "Interaural phase and amplitude relationship of bone - conduction signals"<br>* Pages 202-203, chapter: "B. mastiod vibrator placement" *<br>- - - - - | 1 | |

| TECHNICAL FIELDS SEARCHED (Int. Cl.5) |
|---|
| H 04 R<br>G 02 C |

The present search report has been drawn up for all claims

| Place of search | Date of completion of search | Examiner |
|---|---|---|
| The Hague | 21 December 90 | GASTALDI G.L. |